(19) Europäisches Patentamt
European Patent Office
Office européen des brevets

(11) EP 3 547 452 A1

(12) EUROPEAN PATENT APPLICATION

(43) Date of publication:
02.10.2019 Bulletin 2019/40

(21) Application number: 19161836.2

(22) Date of filing: 11.03.2019

(51) Int Cl.:
H01Q 21/28 (2006.01)   H01Q 25/00 (2006.01)
H01Q 1/32 (2006.01)    H01Q 21/00 (2006.01)
H01Q 21/08 (2006.01)   H01Q 1/42 (2006.01)
H01Q 19/06 (2006.01)   G01S 13/93 (2006.01)
H01Q 23/00 (2006.01)   G01S 13/87 (2006.01)
G01S 7/03 (2006.01)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 28.03.2018 JP 2018061905

(71) Applicant: Panasonic Intellectual Property
Management Co., Ltd.
Osaka-shi, Osaka 540-6207 (JP)

(72) Inventors:
• SHIOZAKI, Ryosuke
  Osaka-shi, Osaka 540-6207 (JP)
• TAKAHASHI, Ken
  Osaka-shi, Osaka 540-6207 (JP)

(74) Representative: Grünecker Patent- und
Rechtsanwälte
PartG mbB
Leopoldstraße 4
80802 München (DE)

(54) RADAR SYSTEM

(57)    The radar system detects positions of targets existing in mutually-separated areas in first and second directions outside the radar system, and includes: a circuit board (1) whose surface is arranged parallel with the first and the second directions; a first transmitting antenna unit (2) arranged in an end portion area of the circuit board facing in the first direction, which transmits a first transmission wave (2R) in the first direction; a second transmitting antenna unit (3) arranged in an end portion area of the circuit board facing in the second direction, which transmits a second transmission wave (3R) in the second direction; and a receiving antenna unit (4) arranged in an end portion area of the circuit board facing in a third direction between the first and second directions, and including antenna elements arranged in a line in a direction orthogonal to the third direction, which receives reflection waves corresponding to the first and second transmission waves.

FIG. 5

EP 3 547 452 A1

**Description**

BACKGROUND

1. Technical Field

The present disclosure relates to a radar system.

2. Description of the Related Art

A radar system has been known which performs non-contact detection on the position of an object (hereinafter also referred to as a "target") using an electromagnetic wave in a millimeter or micrometer frequency band.

This type of radar system is arranged, for example, in four corners of a vehicle body, and is used for multi-directional monitoring, such as front monitoring, front side monitoring or rear side monitoring. For example, the radar system arranged in a rear side of the vehicle body is, for example, used for things such as rear cross traffic alert (RCTA) which helps to check a traffic condition in the rear of the vehicle when the vehicle is backed out of the parking space, lane change assist (LCA) which warns the vehicle's driver when changing lanes, by detecting an object (for example, another vehicle) which is approaching from behind the vehicle.

As a conventional technique concerning this type of radar system, for example, Japanese Unexamined Patent Application Publication (Translation of PCT Application) No. 2008-503904 (hereinafter referred to as "Patent Document 1") discloses wide-range object detection to be achieved by radially arranging multiple end-fire antennae, facing in mutually-different directions, on an antenna board. Meanwhile, Japanese Unexamined Patent Application Publication No. 2012-159348 (hereinafter referred to as "Patent Document 2") discloses object detection to be performed individually on the rear and side of a vehicle by: arranging a boardside array antenna on a board surface of an antenna board; arranging an end-fire array antenna at an edge end of the antenna board; and focusing directivity directions on the rear and side of the vehicle, respectively.

SUMMARY

This type of radar system involves the necessity that the single radar system should cover mutually-separated areas in multiple directions (for example, an area in the rear of the vehicle and an area at a side of the vehicle), as areas in which to perform the object detection. Furthermore, this type of radar system is required to detect not only whether a target exists in the areas in which to perform the object detection, but also highly accurately a position where the target exists (hereinafter also referred to as a "bearing of existence of" the target).

The conventional technique disclosed in Patent Document 1, therefore, increases the number of antenna elements, although capable of achieving the object detection in the wide-range area. In addition, the conventional technique disclosed in Patent Document 1 has a problem with the accuracy of the bearing estimation because the bearing estimation is performed on the target through transmission and reception by each of the multiple antenna elements.

On the other hand, the conventional technique disclosed in Patent Document 2 is incapable of performing the bearing estimation on the target in the area at the side of the vehicle for the structural reason, although capable of achieving the object detection in the area in the rear of the vehicle and the area at the side of the vehicle.

In view of the above problems, a non-limiting example of the present disclosure has been carried out, and contributes to providing a radar system capable of highly accurately estimating a bearing of the existence of a target in mutually-separated areas in multiple directions.

In one general aspect, the techniques disclosed here feature a radar system which detects positions of targets existing in mutually-separated areas in first and second directions outside the radar system, the radar system including: a circuit board whose board surface is arranged parallel with the first and the second directions; a first transmitting antenna unit arranged in an end portion area of the circuit board facing in the first direction, which transmits a first transmission wave in the first direction; a second transmitting antenna unit arranged in an end portion area of the circuit board facing in the second direction, which transmits a second transmission wave in the second direction; and a receiving antenna unit arranged in an end portion area of the circuit board facing in a third direction between the first direction and the second direction, and including a plurality of antenna elements arranged in a line in a direction orthogonal to the third direction, which receives reflection waves corresponding to the first and second transmission waves.

The radar system according to the present disclosure is capable of highly-accurately estimating positions where targets exist in mutually-separated areas in multiple directions.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

BRIEF DESCRIPTION OF THE DRAWINGS

Fig. 1 is a diagram for explaining a radar system's function of detecting an object in the rear of a vehicle;
Fig. 2 is a diagram for explaining the radar system's function of detecting an object at the side of the vehicle;
Fig. 3 is a diagram illustrating examples of a directivity pattern required for an onboard radar system;
Fig. 4 is a perspective view illustrating an external appearance of a radar system according to a first embodiment;
Fig. 5 is a plan view illustrating a configuration of the radar system according to the first embodiment;
Fig. 6 is a block diagram illustrating a configuration of a signal processing IC of the radar system according to the first embodiment;
Fig. 7 is a plan view illustrating a configuration of a radar system according to a second embodiment;
Fig. 8 is a plan view illustrating a configuration of a radar system according to a third embodiment;
Fig. 9 is a plan view illustrating a configuration of a radar system according to a fourth embodiment;
Fig. 10A is a diagram for schematically explaining principles of a MIMO radar;
Fig. 10B is another diagram for schematically explaining principles of the MIMO radar;
Fig. 11 is a plan view illustrating a configuration of a radar system according to a fifth embodiment;
Fig. 12 is a plan view illustrating a configuration of an impedance transformer according to the fifth embodiment;
Fig. 13 is a plan view illustrating a configuration of a radar system according to a sixth embodiment;
Fig. 14 is a plan view illustrating a configuration of an impedance transformer according to the sixth embodiment;
Fig. 15 is a plan view illustrating a configuration of a radar system according to a seventh embodiment;
Fig. 16 is a plan view illustrating a configuration of a radar system according to an eighth embodiment;
Fig. 17 is a side cross-sectional view illustrating the configuration of the radar system according to the eighth embodiment;
Fig. 18 is a plan view illustrating a configuration of a radar system according to a ninth embodiment; and
Fig. 19 is a diagram illustrating an example of a radar system according to a tenth embodiment.

DETAILED DESCRIPTION

Referring to the accompanying drawings, detailed descriptions will be hereinafter provided for embodiments of the present disclosure. In this application and the drawings, components which have substantially the same functions will be denoted by the same reference signs. Duplicated descriptions for them will be omitted.

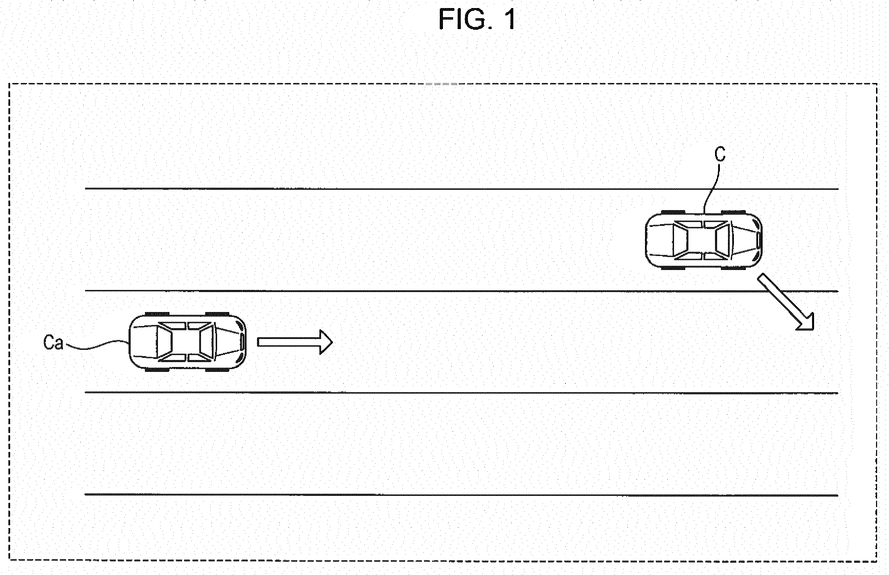

To begin with, referring to Figs. 1 to 3, descriptions will be provided for the concept of the radar system according to the present disclosure. The following descriptions will be provided for an example of the radar system installed in a vehicle, which detects an object in the rear of the vehicle and an object at the side of the vehicle.

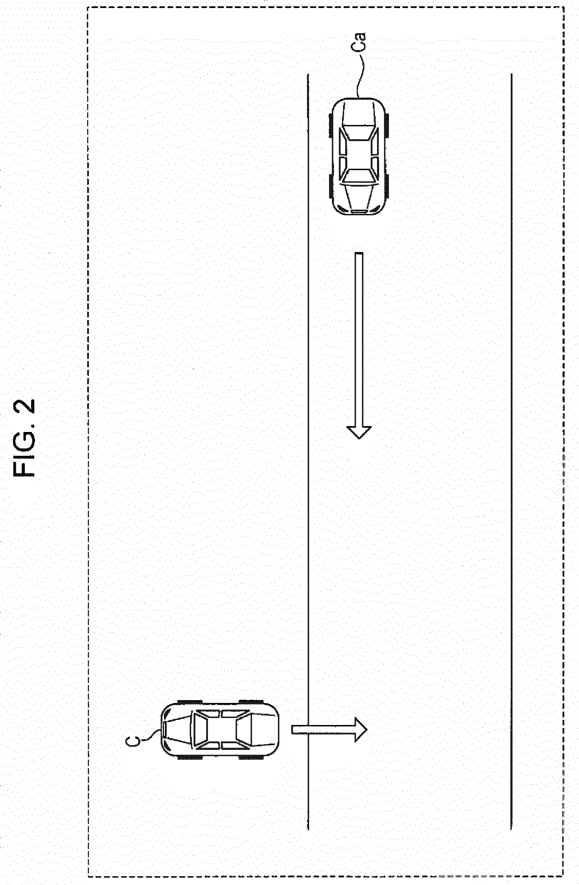

Fig. 1 is a diagram for explaining the radar system's function of detecting an object in the rear of a vehicle. Fig. 2 is a diagram for explaining the radar system's function of detecting an object at the side of the vehicle.

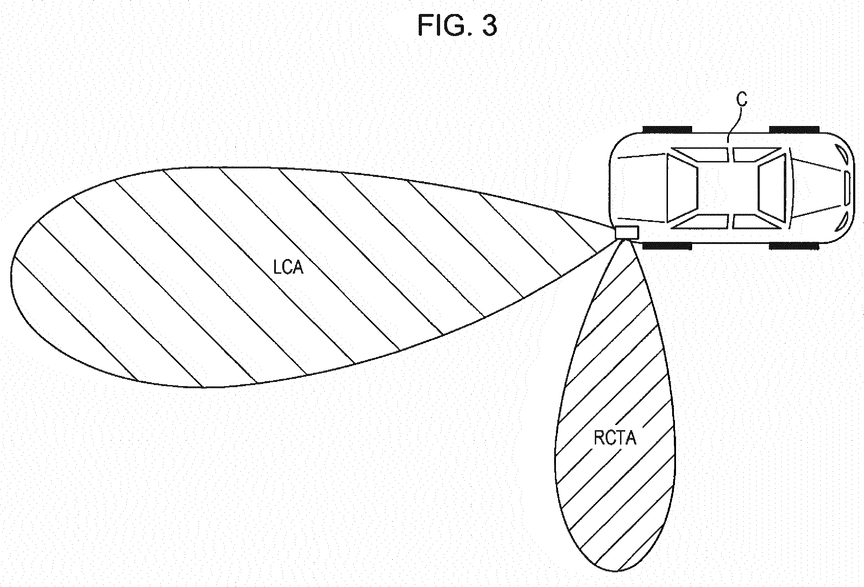

Fig. 3 is a diagram illustrating an example of a directivity pattern required for an onboard radar system.

As illustrated in Fig. 1, for example, the radar system U's function of detecting an object in the rear of a vehicle C (a vehicle equipped with the radar system U, and this is the same below) is used for a purpose of lane change assist which detects another vehicle Ca or the like which is approaching from behind the vehicle C. The radar system serves the purpose, for example, as long as the radar system can highly accurately detect an object existing in a relatively narrow range such as a lane area adjacent to a lane where the vehicle C is running. This radar system is, however, required to have a capability of performing highly accurate bearing estimation, because determination need to be made on things such as which lane another vehicle Ca or the like is running.

As illustrated in Fig. 2, for example, the radar system's function of detecting an object at a side of a vehicle C is used for a purpose of rear cross traffic alert which checks whether another vehicle Ca or the like is approaching from the side of the vehicle C. The radar system serves the purpose, for example, as long as the radar system can highly accurately detect an object existing in a relatively narrow range such as a lane area which the vehicle C is about to enter. However, this radar system is also required to have a capability of performing highly accurate bearing estimation, because determination need to be made on things such as which lane another vehicle Ca or the like is running.

In addition, directivity patterns required for a radar system which executes applications for RCTA and LCA discussed above have high antenna gains for mutually-separated narrow areas in the two directions, as illustrated in Fig. 3. Specifically, it is most preferable that this radar system have a configuration for enabling the radar system to perform highly accurate bearing estimation in the narrow areas in the two directions. In other words, this radar system is less required to perform object detection in an area in a direction intermediate between the direction toward the vehicle rear and the direction toward the vehicle side. Incidentally, as discussed above, the radar system is arranged, for example, in four corners of a vehicle body, and is used for multi-directional monitoring, such as front monitoring, front side monitoring or rear side monitoring. For example, the radar system arranged in a rear side of the vehicle is, for example, used for things such as rear cross traffic alert (RCTA) which helps to check a traffic condition in the rear of the vehicle when the vehicle is backed out of the parking space, lane change assist (LCA) which warns the vehicle's driver when changing lanes, by detecting an object (for example, another vehicle) which is approaching from behind the vehicle.

The directivity patterns required for the radar system used for this purpose have a higher antenna gain for the vehicle rear in which there is likelihood that the vehicle C and another vehicle Ca approach each other abruptly than for the vehicle side. For this reason, in a case where the number of antenna elements which can be arranged is limited, it is preferable that the radar system have a configuration in which the antenna gain for the vehicle rear is higher than the antenna gain for the vehicle side.

(First Embodiment)

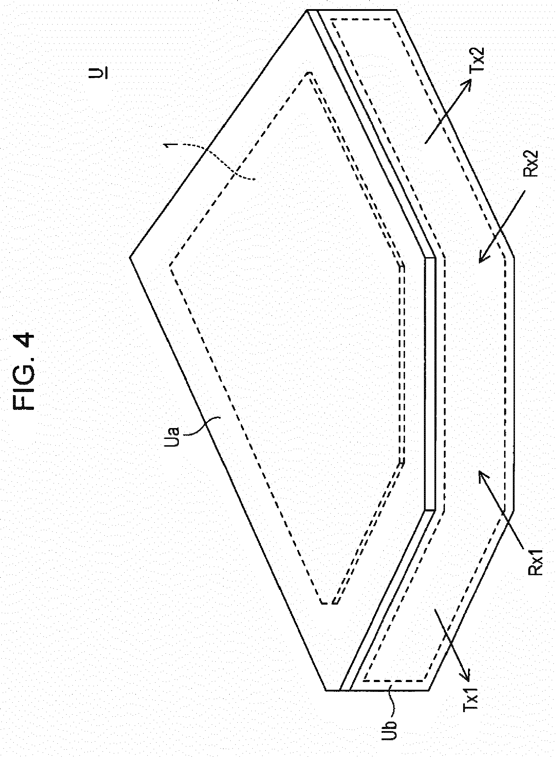

Referring to Figs. 4 to 6, descriptions will be provided for a configuration of a radar system according to an embodiment of the present disclosure which is capable of performing highly-accurate bearing estimation in mutually-separated areas in multiple directions.

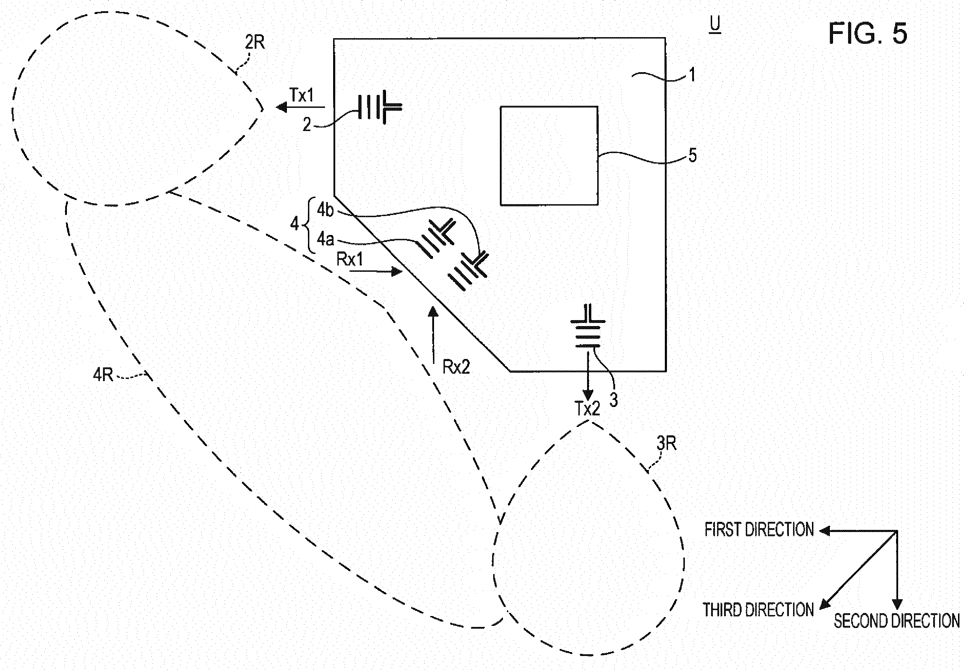

Fig. 4 is a perspective view illustrating an external appearance of a radar system U according to a first embodiment. Fig. 5 is a plan view illustrating a configuration of the radar system U according to the first embodiment. Incidentally, the plan view of Fig. 5 is a plan diagram of a circuit board 1 inside a housing Ua.

Like the radar system illustrated in Figs. 1 to 3, the radar system U according to the first embodiment is, for example, installed in a vehicle, and is used to detect an object in the rear of the vehicle and an object at the side of the vehicle.

The radar system U according to the first embodiment has a configuration for transmitting electromagnetic waves respectively in two mutually orthogonal directions (in this case, toward the rear of the vehicle and the side of the vehicle) outside the radar system U (hereinafter referred to as "outside the system).

Of the two mutually orthogonal directions in which the radar system U transmits the electromagnetic waves, the direction toward the vehicle rear is referred as a "first direction," while the direction toward the vehicle side is referred as a "second direction." A directivity direction of a receiving antenna unit 4 is referred as to a "third direction." The directivity direction is a direction which makes the antenna gain become the largest in the directivity patterns (this is the same below), and which is located between the first direction and the second direction (a direction substantially intermediate between the first direction and the second direction in Fig. 5). In each drawing, the first, second and third directions are represented by the respective arrows each with a solid line.

The radar system U according to the first embodiment includes the housing Ua, the circuit board 1, a first transmitting antenna unit 2, a second transmitting antenna unit 3, the receiving antenna unit 4, and a signal processing IC 5.

The circuit board 1, the first transmitting antenna unit 2, the second transmitting antenna unit 3, the receiving antenna unit 4, and the signal processing IC 5 are housed in the housing Ua. The first and second transmitting antenna units 2, 3 transmit electromagnetic waves through a window section Ub, and the receiving antenna unit 4 receives electromagnetic waves through the window section Ub. The window section Ub is formed in the housing Ua, and is made of resin or the like which allows the electromagnetic waves to pass through it.

The circuit board 1 is a circuit board in which the first transmitting antenna unit 2, the second transmitting antenna unit 3, the receiving antenna unit 4, the signal processing IC 5 and the like are arranged. These components (the first transmitting antenna unit 2, the second transmitting antenna unit 3, the receiving antenna unit 4, and the signal processing IC 5) are arranged in the circuit board 1. Patterned wirings (not illustrated) electrically connecting these components together are also formed in the circuit board 1.

The present disclosure does not limit the material of the circuit board 1 to a particular one, but, for example, a printed circuit board (PCB) may be used as the material of the circuit board 1. A multilayered board, or a semiconductor board with the signal processing IC 5 mounted on it may be used as the circuit board 1. The circuit board 1 is formed, for example, in the form of a flat plate.

Inside the housing Ua, the circuit board 1 is arranged such that the board surface of the circuit board 1 is in parallel with the first and second directions. The circuit board 1 is arranged such that the board surface thereof is, for example, in parallel with the ground.

The first transmitting antenna unit 2 is arranged in an end portion area of the circuit board 1 which faces in the first direction (meaning facing in the first direction of the two mutually opposite directions along the first direction). The first transmitting antenna unit 2 transmits an electromagnetic wave (hereinafter referred to as a "first transmission wave) Tx1 in the first direction.

The first transmitting antenna unit 2 is formed, for example, from an end-fire array antenna constructed such that the first direction is the directivity direction of the first transmitting antenna unit 2. The end-fire array antenna is formed from multiple strip conductors pattern-formed in the board surface with their longitudinal directions arranged in parallel with one another. The end-fire array antenna transmits and receives electromagnetic waves in the directions in which the multiple strip conductors are arranged.

The directivity characteristic of the first transmitting antenna unit 2 has, for example, a directivity pattern which allows the first transmitting antenna unit 2 to transmit the electromagnetic wave in the first direction as the directivity direction such that the beam width of the electromagnetic wave is in a range of approximately -30° to +30° from the first direction, for example, as illustrated in an area 2R in Fig. 5.

The second transmitting antenna unit 3 is arranged in an end portion area of the circuit board 1 which faces in the second direction (meaning facing in the second direction of the two mutually opposite directions along the second direction). The second transmitting antenna unit 3 transmits an electromagnetic wave (hereinafter referred to as a "second transmission wave) Tx2 in the second direction. The second transmitting antenna unit 3 is formed, for example, from an end-fire array antenna constructed such that the second direction is the directivity direction of the second transmitting antenna unit 3.

The directivity characteristic of the second transmitting antenna unit 3 has, for example, a directivity pattern which allows the second transmitting antenna unit 3 to transmit the electromagnetic wave in the second direction as the directivity direction such that the beam width of the electromagnetic wave is in a range of approximately -30° to +30° from the second direction, for example, as illustrated in an area 3R in Fig. 5. In this respect, 30° is a half-value angle of the beam width thereof.

Fig. 5 illustrates a mode in which the first transmitting antenna unit 2 and the second transmitting antenna unit 3 are each formed from a single antenna element (meaning a unit antenna which transmits and receives electromagnetic waves. In this respect, a single end-fire array antenna corresponds to a single antenna element. This is the same below). However, it is a matter of course that the first transmitting antenna unit 2 and the second transmitting antenna unit 3 each may be formed from multiple antenna elements).

The receiving antenna unit 4 is arranged in an end portion area of the circuit board 1 which faces in the third direction (meaning facing in the third direction of the two mutually opposite directions along the third direction). The receiving antenna unit 4 includes multiple antenna elements 4a, 4b arranged in a direction parallel with the third direction. The receiving antenna unit 4 receives a reflection wave Rx1 (hereinafter also referred to as a "first reflection wave Rx1") resulting from the reflection of the first transmission wave Tx1 by the target, and a reflection wave Rx2 (hereinafter also referred to as a "second reflection wave Rx2") resulting from the reflection of the second transmission wave Tx2 by the target.

In a plan view, the antenna elements 4a, 4b in the receiving antenna unit 4 are, for example, arranged in a line in an extension direction of an end portion of the circuit board 1 which faces in the third direction side, in an area of the circuit board 1 between the first transmitting antenna unit 2 and the second transmitting antenna unit 3.

The antenna elements 4a, 4b included in the receiving antenna unit 4 are each formed from an end-fire array antenna constructed such that the third direction is the directivity direction of the antenna element. Fig. 5 illustrates the two antenna elements 4a, 4b for the explanatory sake. However, it is a matter of course that three or more antenna elements may be arranged in the receiving antenna unit 4. The pattern in which the antenna elements included in the receiving antenna unit 4 are arranged is not limited to the linear pattern, and may be a staggered pattern or the like.

The directivity characteristic of the receiving antenna unit 4 has, for example, a directivity pattern which enables the receiving antenna unit 4 to receive the electromagnetic waves between the first direction and the second direction with the third direction set as the directivity direction, as illustrated in an area 4R in Fig. 5. In the first embodiment, the third direction as the directivity direction of the receiving antenna unit 4 is set at a direction substantially intermediate between the first direction and the second direction such that an antenna gain in the first direction and an antenna gain in the second direction are substantially equal to each other. Incidentally, the third direction may fall within a range of a direction inclined by 20° to the first direction from the direction substantially intermediate between the first direction and the second direction and a direction inclined by 20° to the second direction from the direction substantially intermediate between the first direction and the second direction.

This configuration makes it possible for the receiving antenna unit 4 to receive both the first reflection wave Rx1 returning from the first direction and the second reflection wave Rx2 returning from the second direction. The signal processing IC 5 estimates a bearing of a target existing in the first direction by obtaining a phase difference between phases of the first reflection wave Rx1 detected by the respective antenna elements 4a, 4b in the receiving antenna unit 4. The signal processing IC 5 further estimates a bearing of a target existing in the second direction by obtaining a phase difference between phases of the second reflection wave Rx2 detected by the respective antenna elements 4a, 4b in the receiving antenna unit 4.

The signal processing IC 5 sends and receives electric signals to and from the first transmitting antenna unit 2, the second transmitting antenna unit 3 and the receiving antenna unit 4, and thereby transmits and receives electromagnetic waves. The signal processing IC 5 is formed mainly from a well-known microcomputer, for example, including a CPU, a ROM and a RAM, and also includes an oscillator, a signal processing circuit for the transmission and reception processes, and the like. This embodiment illustrates a mode in which the signal processing IC 5 includes a single IC chip, for the explanatory sake. However, the number of IC chips included in the signal processing IC 5 is arbitrary.

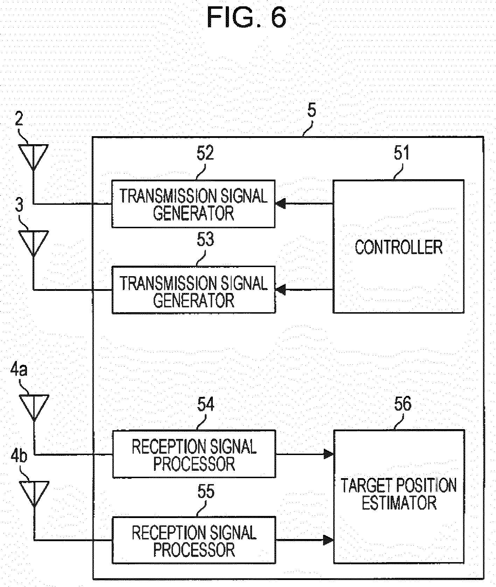

Fig. 6 is a block diagram illustrating a configuration of the signal processing IC 5 of the radar system U according to the first embodiment.

The signal processing IC 5 according to the first embodiment builds, for example, the radar system U which transmits frequency modulated continuous waves (FM-CW). The signal processing IC 5 may build, instead, the radar system U which transmits pulse waves.

The signal processing IC 5, for example, includes: a controller 51; transmission signal generators 52, 53 connected respectively to the first and second transmitting antenna units 2, 3; reception signal processors 54, 55 which are connected respectively to the antenna elements 4a, 4b of the receiving antenna unit 4, and which process reception signals representing the first and second reflection waves Rx1, Rx2 from the target, respectively; and a target position estimator 56 which obtains the processed reception signals from the reception signal processors 54, 55, respectively.

The controller 51 controls, for example, the operations of the transmission signal generators 52, 53 individually. The controller 51 operates the transmission signal generator 52 and the transmission signal generator 53 in a time-division way in order to make the first reflection wave Rx1 and the second reflection wave Rx2 distinguishable from each other. Incidentally, the controller 51 may make the transmission signal generator 52 and the transmission signal generator 53 generate their respective transmission signals such that the polarization directions of the first and second transmission waves Tx1, Tx2 are different from each other. Otherwise, the controller 51 may make the transmission signal generator 52 and the transmission signal generator 53 generate their respective transmission signals such that there is no correlation between the first and second transmission waves Tx1, Tx2.

The transmission signal generators 52, 53, for example, continuously generate their respective high-frequency (for example, a millimeter frequency band) transmission signals resulting from a frequency modulation process of the transmission signals using a reference signal obtained from the oscillator such that the frequencies of the transmission signals gradually increase and decrease in a repetitive way with time. Thereafter, based on the transmission signals, the transmission signal generators 52, 53 send out their transmission signals to the transmitting antennae (the first and second transmitting antenna units 2, 3) connected to the transmission signal generators 52, 53, and the transmitting antennae (the first and second transmitting antenna units 2, 3) connected to the transmission signal generators 52, 53 transmit the frequency-modulated electromagnetic waves (the first and second transmission waves Tx1, Tx2).

The reception signal processors 54, 55, for example, perform a quadrature detection process, a frequency analysis process and the like on the reception signals representing the first reflection waves Rx1 (or the second reflection waves Rx2) obtained from the antenna elements 4a, 4b connected to the reception signal processors 54, 55, using the respective local signals generated by the transmission signal generators 52, 53.

From the reception signal processors 54, 55, the target position estimator 56 receives the processed reception signals which represent the first reflection waves Rx1 (the second reflection waves Rx2) from the target. The target position estimator 56 calculates a phase difference between the phase of the first reflection wave Rx1 (or the second reflection wave Rx2) received by the antenna element 4a and the phase of the first reflection wave Rx1 (or the second reflection wave Rx2) received by the antenna element 4b. Thereby, the target position estimator 56 estimates the bearing of the target. Incidentally, when estimating the position of the target, the target position estimator 56 may detect a distance to the target, a speed relative to the target, and the like.

It should be noted that the process performed by the signal processing IC 5 is the same as the publicly known configuration. Detailed descriptions for the process, therefore, will be omitted.

(Effects)

As discussed above, the radar system U according to the first embodiment includes: the circuit board 1 whose board surface is arranged parallel with the first and the second directions (for example, the direction toward the vehicle rear and the direction toward the vehicle side); the first transmitting antenna unit 2 arranged in the end portion area of the circuit board 1 facing in the first direction, which transmits the first transmission wave Tx1 in the first direction; the second transmitting antenna unit 3 arranged in the end portion area of the circuit board 1 facing in the second direction, which transmits the second transmission wave Tx2 in the second direction; and the receiving antenna unit 4 arranged in the end portion area of the circuit board 1 facing in the third direction between the first direction and the second direction, and including the multiple antenna elements 4a, 4b arranged in a line in the direction orthogonal to the third direction, which receives the reflection waves Rx1, Rx2 corresponding to the first and second transmission waves Tx1, Tx2.

The radar system U according to the first embodiment is, therefore, capable of: using the first transmitting antenna unit 2 and the second transmitting antenna unit 3 provided respectively for the uses in the first direction and the second direction; thereby securing high output gains respectively in the first direction and the second direction; and thus highly accurately estimating the positions of the targets existing in the areas in the first direction and the second direction by use of the common receiving antenna unit 4. The radar system U according to the first embodiment is capable of achieving the highly accurate target bearing estimation in each of the mutually-separated areas in the first direction and the second direction.

The first embodiment describes the radar system U which detects objects in the two directions, that is to say, the direction toward the vehicle side and the direction toward the vehicle rear, as a modification of the radar system U. However, it is a matter of course that the radar system U according to the first embodiment is applicable for other uses. The angle between the first direction and the second direction may differ depending on the uses and the like. For example, in a case where the angle between the first direction and the second direction is 60° or more but 120° or less, the radar system U according to the first embodiment is capable of highly accurately estimating the positions of the targets in the first direction and the second direction, respectively, by use of the common receiving antenna unit 4.

(Second Embodiment)

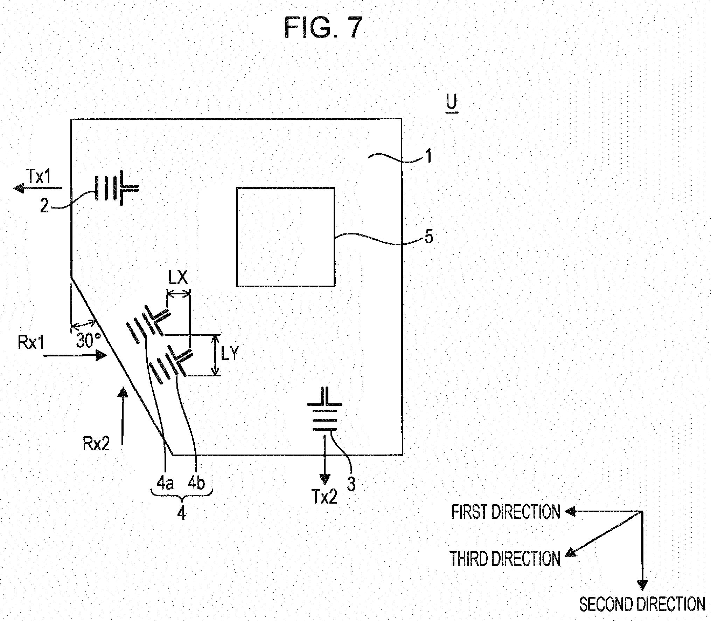

Next, referring to Fig. 7, descriptions will be provided for an example of a configuration of a radar system U according to a second embodiment.
The radar system U according to the second embodiment is different from the radar system U according to the first embodiment I in that the receiving antenna unit 4 is set to be capable of obtaining a higher antenna gain regarding the first reflection wave Rx1. Incidentally, descriptions for components which are common between the second embodiment and the first embodiments will be omitted (this is the case with the other embodiments as follows).
Fig. 7 is a plan view illustrating the configuration of the radar system U according to the second embodiment.
The receiving antenna unit 4 according to the second embodiment is arranged such that the third direction as the directivity direction of the receiving antenna unit 4 tilts to the first direction and farther from the second direction. In other words, the antenna elements 4a, 4b of the receiving antenna unit 4 are arranged such that the direction in which the antenna elements 4a, 4b are arranged in a line tilts to the second direction and farther from the first direction. In Fig. 7, the direction in which the antenna elements 4a, 4b of the receiving antenna unit 4 are arranged in a line is set at an angle of approximately 30° to the second direction.
Generally speaking, the directivity characteristic of an array antenna is that: the gain of the array antenna is largest in a direction orthogonal to the direction in which the antenna elements of the array antenna are arranged in a line; and the antenna gain in a direction becomes gradually lower as the direction becomes farther from the orthogonal direction. In addition, the bearing estimation resolution of the radar system depends on an antenna element pitch which is viewed in the direction in which the bearing estimation is performed. In general, a wider antenna element pitch makes the directivity sharper, and the bearing estimation resolution higher. For example, an antenna element with a half-value angle of the beam width equal to 1° can make its bearing estimation resolution higher by up to approximately 1°.
From this viewpoint, the radar system U according to the second embodiment has a configuration which directs the directivity direction of the receiving antenna unit 4 to the first direction (that is to say, the direction toward the vehicle rear) which enables the receiving antenna unit 4 to obtain a higher antenna gain than any other direction. Specifically, the receiving antenna unit 4 according to the second embodiment is arranged such that a pitch Lx between the antenna elements 4a, 4b viewed from the first direction is larger than a pitch Ly between the antenna elements 4a, 4b viewed from the second direction, for example, such that LX:LY is set approximately equal to √3:1.
As discussed above, in the radar system U according to the second embodiment, the receiving antenna unit 4 is arranged such that the third direction as the directivity direction of the receiving antenna unit 4 tilts to the first direction and farther from the second direction. This makes it possible to enhance the gain in the first direction and the bearing estimation resolution without increasing the number of antenna elements.

(Third Embodiment)

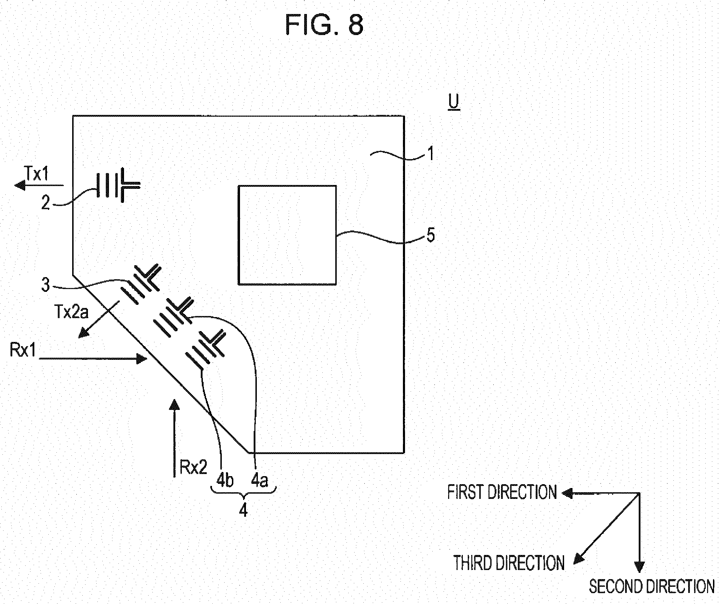

Next, referring to Fig. 8, descriptions will be provided for a radar system U according to a third embodiment.
The radar system U according to the third embodiment is different from the radar system U according to the first embodiment in that the first transmitting antenna unit 2 and the second transmitting antenna unit 3 constitute an array antenna.
Fig. 8 is a plan view illustrating a configuration of the radar system U according to the third embodiment.
The second transmitting antenna unit 3 according to the third embodiment is arranged adjacent to the first transmitting antenna unit 2, and in the direction in which the antenna elements 4a, 4b included in the receiving antenna unit 4 are arranged in a line.
The second transmitting antenna unit 3 is arranged such that the directivity direction of the second transmitting antenna unit 3 is a direction (the third direction in this case) between the first direction and the second direction for the purpose of making the range of the directivity pattern of the first transmitting antenna unit 2 and the range of the directivity pattern of the second transmitting antenna unit 3 overlap each other.

The second transmitting antenna unit 3, together with the first transmitting antenna unit 2, forms the array antenna (also referred to as a phased-array antenna) as discussed above, and transmits the second transmission wave Tx2 in the second direction. In other words, the radar system U according to the third embodiment transmits an electromagnetic wave in the second direction by transmitting electromagnetic waves respectively from both the first transmitting antenna unit 2 and the second transmitting antenna unit 3 at the same time while controlling the phase difference between the phases of the electromagnetic waves transmitted from the first and second transmitting antenna units 2, 3. This process is performed, for example, by the controller 51 in the signal processing IC 5.

Since the first transmitting antenna unit 2 and the second transmitting antenna unit 3 constitute the array antenna, the first transmitting antenna unit 2 and the second transmitting antenna unit 3 both can be used to detect an object in an area in the first direction, and can thus constitute a multiple-input multiple-output (MIMO) radar or the like. Incidentally, since the first transmitting antenna unit 2 and the second transmitting antenna unit 3 constitute the MIMO radar, the third embodiment can construct a virtual receiving array including the four antenna elements (which will be below described in a fourth embodiment).

As discussed above, because of using the first transmitting antenna unit 2 and the second transmitting antenna unit 3, the radar system U according to the third embodiment is capable of highly accurately detecting an object in the area in the first direction.

(Fourth Embodiment)

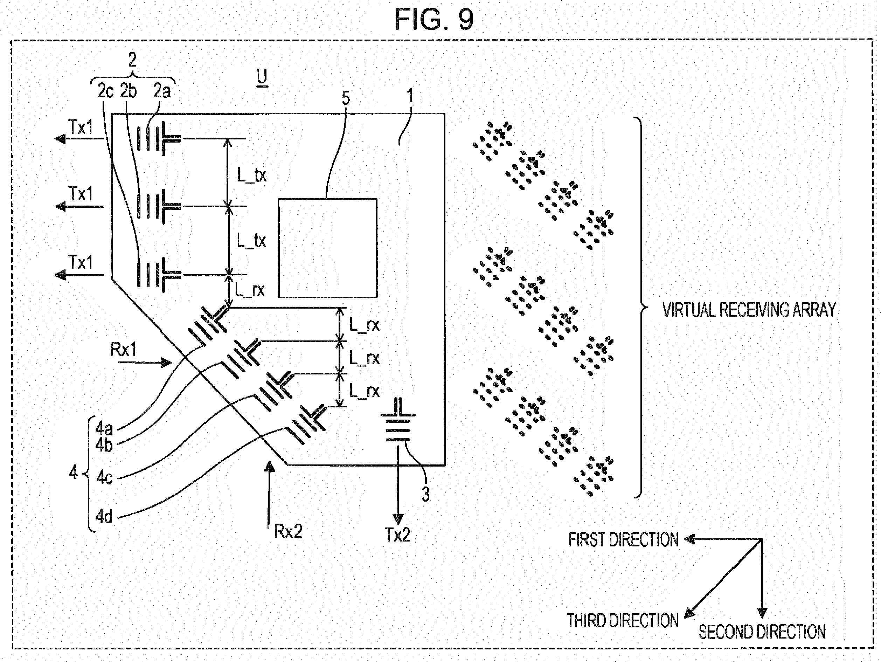

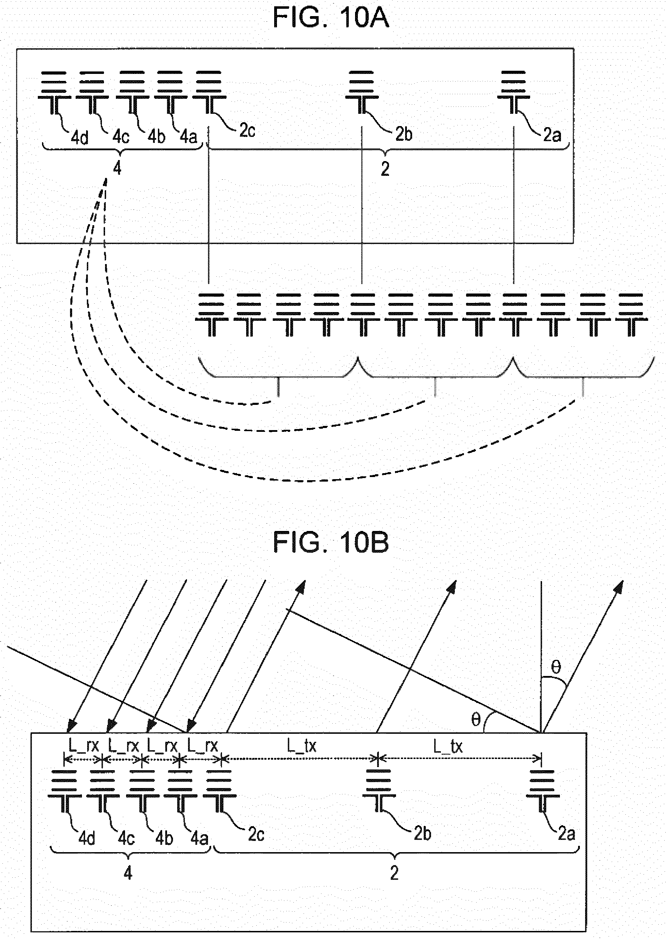

Next, referring to Figs. 9, 10A and 10B, descriptions will be provided for a radar system U according to the fourth embodiment.

Fig. 9 is a plan view illustrating a configuration of the radar system U according to the fourth embodiment.

The radar system U according to the fourth embodiment is different from the radar system U according to the first embodiment in that the first transmitting antenna unit 2 includes multiple antenna elements arranged in a line in a direction orthogonal to the first direction. In the radar system U according to the fourth embodiment, the number of antenna elements in the receiving antenna unit 4 is four (4a, 4b, 4c, 4d) for the sake of explanatory convenience.

Antenna elements 2a, 2b, 2c in the first transmitting antenna unit 2 are arranged at equal intervals of a predetermined pitch in the direction orthogonal to the first direction, and thereby constitute the MIMO radar. In the fourth embodiment, in the case where the antenna elements 2a, 2b, 2c constitute the MIMO radar, the antenna elements 4a, 4b, 4c, 4d in the receiving antenna unit 4 are similarly arranged at equal intervals of a predetermined pitch.

In this case, a pitch L_tx between the antenna elements 2a, 2b, 2c in the first transmitting antenna unit 2 is set different from a pitch L_rx between the antenna elements 4a, 4b, 4c, 4d in the receiving antenna unit 4 which is viewed from the first direction. For example, the pitch L_rx between the antenna elements 4a, 4b, 4c, 4d in the receiving antenna unit 4 is used as a reference, and the pitch L_tx is set equal to the multiplication of the pitch L_rx by the number of antenna elements in the receiving antenna unit 4. For example, in Fig. 9, the pitch L_tx between the antenna elements 2a, 2b, 2c in the first transmitting antenna unit 2 is set four times the pitch L_rx between the antenna elements 4a, 4b, 4c, 4d in the receiving antenna unit 4 which is viewed from the first direction. This makes it possible to construct a virtual receiving array antenna including 12 antenna elements (in this case), where 12 is equal to the multiplication of the number of antenna elements in the first transmitting antenna unit 2 by the number of antenna elements in the receiving antenna unit 4.

Figs. 10A and 10B are each a diagram for schematically explaining principles of the MIMO radar. For the sake of explanatory convenience, Figs. 10A and 10B illustrate a case where the antenna elements 4a, 4b, 4c, 4d in the receiving antenna unit 4 and the antenna elements 2a, 2b, 2c in the first transmitting antenna unit 2 are all arranged in a line.

Generally speaking, in a case where a target is fully away, all the bearings of the target viewed from the antenna elements 2a, 2b, 2c, 4a, 4b, 4c, 4d are in the same direction regardless of whether electromagnetic waves are transmitted or received. Of the electromagnetic waves transmitted by the antenna elements 2a, 2b, 2c in the first transmitting antenna unit 2, electromagnetic waves travelling to the bearing of the target have specific phase differences which depend on the intervals among the antenna elements 2a, 2b, 2c in the first transmitting antenna unit 2, and thus fall incident onto the antenna elements 4a, 4b, 4c, 4d in the receiving antenna unit 4 from the same bearing after hitting and being reflected by the target.

In this event, the reflection waves to be received by the antenna elements 4a, 4b, 4c, 4d in the receiving antenna unit 4 fall onto the antenna elements 4a, 4b, 4c, 4d in the receiving antenna unit 4 with the phase differences depending on the pitch of the antenna elements 4a, 4b, 4c, 4d therein. The MIMO radar uses the phase differences which occur during the transmission and reception.

Normally, the electromagnetic waves transmitted by the antenna elements 2a, 2b, 2c in the first transmitting antenna unit 2 are orthogonalized to one another through time division, code division or the like. Meanwhile, the antenna elements 4a, 4b, 4c, 4d in the receiving antenna unit 4 are orthogonalized to one another by their respective processing systems.

Specifically, in the first transmitting antenna unit 2, the phase difference [rad] between the phase of the electromagnetic wave transmitted by the antenna element 2a and the phase of the electromagnetic wave transmitted by the antenna element 2b is expressed with

$$L\_tx \times \sin\theta \times 2\pi/\lambda 0,$$

where L_tx is the pitch of the antenna element 2a and the antenna element 2b; θ is an angle of arrival; and λ0 is a free space wavelength. Furthermore, in a case where the pitch of the antenna element 2c and the antenna element 2b is equal to the pitch of the antenna element 2b and the antenna element 2a, the phase difference [rad] between the phase of the electromagnetic wave transmitted by the antenna element 2a and the phase of the electromagnetic wave transmitted by the antenna element 2c is expressed with

$$L\_tx \times 2 \times \sin\theta \times 2\pi/\lambda 0,$$

and is twice the phase difference between the phase of the electromagnetic wave transmitted by the antenna element 2a and the phase of the electromagnetic wave transmitted by the antenna element 2b.

On the other hand, in the receiving antenna unit 4, the phase difference between the phase of the reflection wave arriving at the antenna element 4a and the phase of the reflection wave arriving at the antenna element 4b is expressed with

$$L\_rx \times \sin\theta \times 2\pi/\lambda 0,$$

where L_rx is the pitch of the antenna element 4a and the antenna element 4b; θ is an angle of arrival; and λ0 is a free space wavelength. Furthermore, the phase difference between the phase of the reflection wave arriving at the antenna element 4a and the phase of the reflection wave arriving at the antenna element 4c, and the phase difference between the phase of the reflection wave arriving at the antenna element 4a and the phase of the reflection wave arriving at the antenna element 4d are considered in the same way.

Assuming that the path of the electromagnetic wave transmitted by the antenna element 2a and received by the antenna element 4a is a reference (hereinafter referred to as a reference path), let us examine phase differences between the phase of the electromagnetic wave travelling the reference path and the phases of electromagnetic waves travelling the other paths. The phase difference between the phase of the electromagnetic wave travelling the reference path and the phase of an electromagnetic wave transmitted by the antenna element 2a and received by the antenna element 4b is expressed with $L\_rx \times \sin\theta \times 2\pi/\lambda 0$. The phase difference between the phase of the electromagnetic wave travelling the reference path and the phase of an electromagnetic wave transmitted by the antenna element 2b and received by the antenna element 4a is expressed with $L\_tx \times \sin\theta \times 2\pi/\lambda 0$. The phase difference between the phase of the electromagnetic wave travelling the reference path and the phase of an electromagnetic wave transmitted by the antenna element 2b and received by the antenna element 4b is expressed with $L\_rx \times \sin\theta \times 2\pi/\lambda 0 + L\_tx \sin\theta \times 2\pi/\lambda 0 = (L\_rx + L\_tx) \times \sin\theta \times 2\pi/\lambda 0$.

In a case where the path of the electromagnetic wave transmitted by the antenna element 2a and received by the antenna element 4a is expressed with root 2a/4a, and each other path is expressed with root (one of the antenna elements 2a, 2b, 2c in the first transmitting antenna unit 2)/(one of the antenna element of 4a, 4b, 4c, 4d in the receiving antenna unit 4), the phase differences between the phase of the electromagnetic wave traveling the reference path and the phases of the electromagnetic waves travelling the other paths are expressed as follows.

$$\text{root2a/4b} - \text{root2a/4a} = (L\_rx \times 1 + L\_tx \times 0) \times \sin\theta \times 2\pi/\lambda 0$$

$$\text{root2a/4c} - \text{root2a/4a} = (L\_rx \times 2 + L\_tx \times 0) \times \sin\theta \times 2\pi/\lambda 0$$

$$\text{root2a/4d} - \text{root2a/4a} = (L\_rx \times 3 + L\_tx \times 0) \times \sin\theta \times 2\pi/\lambda 0$$

$$root2b/4a-root2a/4a=(L\_rx \times 0+L\_tx \times 1) \times \sin\theta \times 2\pi/\lambda 0$$

$$root2b/4b-root2a/4a=(L\_rx \times 1+L\_tx \times 1) \times \sin\theta \times 2\pi/\lambda 0$$

$$root2b/4c-root2a/4a=(L\_rx \times 2+L\_tx \times 1) \times \sin\theta \times 2\pi/\lambda 0$$

$$root2b/4d-root2a/4a=(L\_rx \times 3+L\_tx \times 1) \times \sin\theta \times 2\pi/\lambda 0$$

$$root2c/4a-root2a/4a=(L\_rx \times 0+L\_tx \times 2) \times \sin\theta \times 2\pi/\lambda 0$$

$$root2c/4b-root2a/4a=(L\_rx \times 1+L\_tx \times 2) \times \sin\theta \times 2\pi/\lambda 0$$

$$root2c/4c-root2a/4a=(L\_rx \times 2+L\_tx \times 2) \times \sin\theta \times 2\pi/\lambda 0$$

$$root2c/4d-root2a/4a=(L\_rx \times 3+L\_tx \times 2) \times \sin\theta \times 2\pi/\lambda 0$$

When a condition of L_tx=L_rx×4 is added to the above equations, the phase differences between the phase of the electromagnetic wave traveling the reference path and the phases of the electromagnetic waves travelling the other paths are converted as follows.

$$root2a/4b-root2a/4a=(L\_rx \times 1) \times \sin\theta \times 2\pi/\lambda 0$$

$$root2a/4c-root2a/4a=(L\_rx \times 2) \times \sin\theta \times 2\pi/\lambda 0$$

$$root2a/4d-root2a/4a=(L\_rx \times 3) \times \sin\theta \times 2\pi/\lambda 0$$

$$root2b/4a-root2a/4a=(L\_rx \times 4) \times \sin\theta \times 2\pi/\lambda 0$$

$$root2b/4b-root2a/4a=(L\_rx \times 5) \times \sin\theta \times 2\pi/\lambda 0$$

$$root2b/4c-root2a/4a=(L\_rx \times 6) \times \sin\theta \times 2\pi/\lambda 0$$

$$root2b/4d-root2a/4a=(L\_rx \times 7) \times \sin\theta \times 2\pi/\lambda 0$$

$$root2c/4a-root2a/4a=(L\_rx \times 8) \times \sin\theta \times 2\pi/\lambda 0$$

$$root2c/4b-root2a/4a=(L\_rx \times 9) \times \sin\theta \times 2\pi/\lambda 0$$

$$root2c/4c-root2a/4a=(L\_rx \times 10) \times sin\theta \times 2\pi/\lambda0$$

$$root2c/4d-root2a/4a=(L\_rx \times 11) \times sin\theta \times 2\pi/\lambda0$$

The above equations each allow the corresponding electromagnetic wave to be identified as being transmitted by which of the antenna elements 2a, 2b, 2c in the first transmitting antenna unit 2 and received by which of the antenna elements 4a, 4b, 4c, 4d in the receiving antenna unit 4. This means that the MIMO radar in which the first transmitting antenna unit 2 includes the antenna elements 2a, 2b, 2c and the receiving antenna unit 4 includes the antenna elements 4a, 4b, 4c, 4d is capable of achieving the same resolution as a radar system in which: the number of antenna elements in the first transmitting antenna unit 2 is one while 12 antenna elements in the receiving antenna unit 4 are arranged at equal intervals of the pitch L_rx. The MIMO radar achieves a higher angular separation resolution by virtually arranging its antennae using these phase differences.

In the fourth embodiment, the direction in which the antenna elements 2a, 2b, 2c in the first transmitting antenna unit 2 are arranged in a line has an angle to the direction in which the antenna elements 4a, 4b, 4c, 4d in the receiving antenna unit 4 are arranged in a line. With the phase differences on the basis of this angle also taken into consideration, therefore, the signal processing IC 5 identifies each electromagnetic wave as being transmitted by which of the antenna elements 2a, 2b, 2c in the first transmitting antenna unit 2 and received by which of the antenna elements 4a, 4b, 4c, 4d in the receiving antenna unit 4. The signal process performed by the signal processing IC 5 is the same as the publicly-known one, and detailed descriptions for the signal process will be omitted.

As discussed above, in the radar system U according to the fourth embodiment, the first transmitting antenna unit 2 includes the multiple antenna elements 2a, 2b, 2c arranged in a line in the direction orthogonal to the first direction. This makes it possible to further enhance the accuracy of detecting an object in the area in the first direction without increasing the number of antenna elements. As for the position of a target existing in the area in the second direction, the bearing estimation can be performed using the second transmitting antenna unit 3, as in the case of the first embodiment.

The radar system U according to the fourth embodiment is also capable of performing beam steering by transmitting electromagnetic waves respectively from the antenna elements 2a, 2b, 2c in the first transmitting antenna unit 2 at the same time while controlling the phase differences among the phases of the electromagnetic waves transmitted from the antenna elements 2a, 2b, 2c.

(Fifth Embodiment)

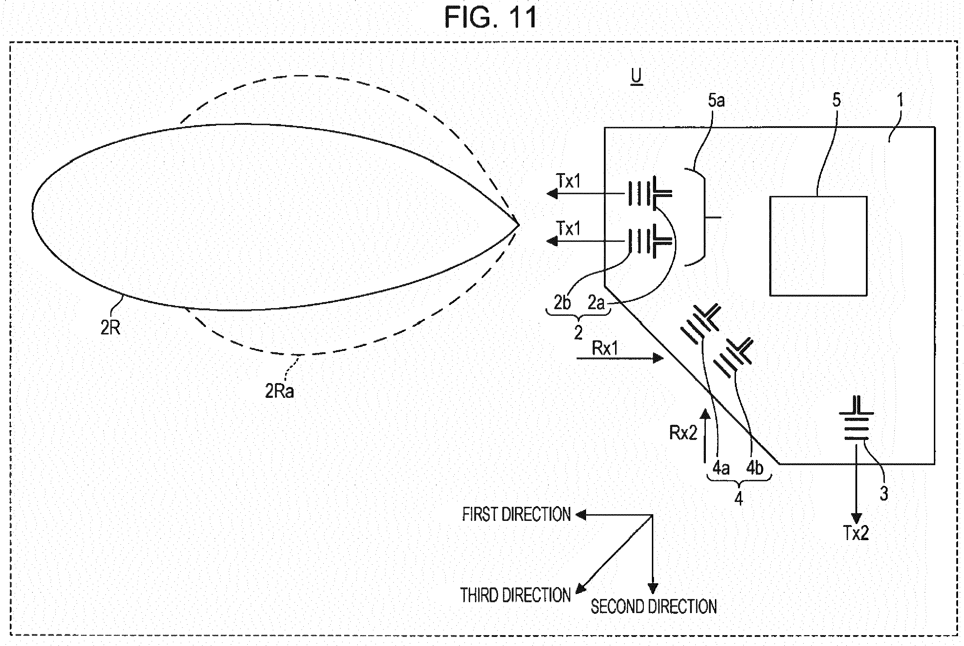

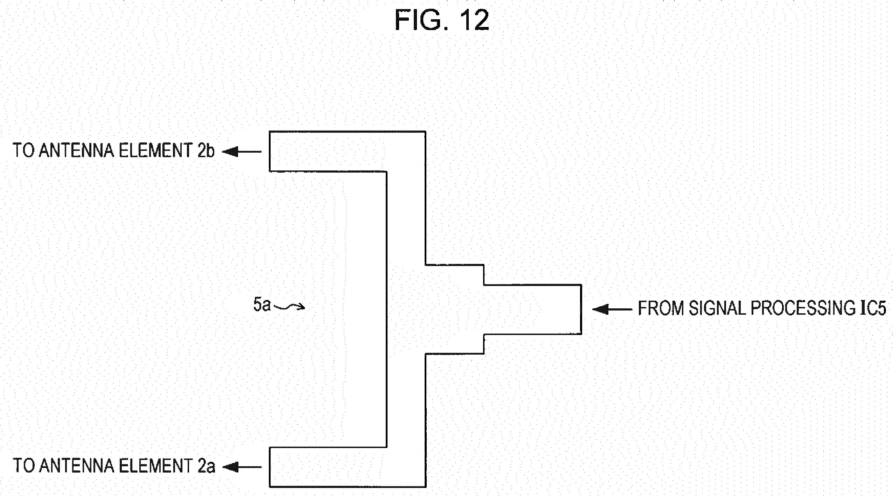

Next, referring to Figs. 11 and 12, descriptions will be provided for a radar system U according to a fifth embodiment.

Fig. 11 is a plan view illustrating a configuration of the radar system U according to the fifth embodiment.

The radar system U according to the fifth embodiment is different from the radar system U according to the first embodiment in that the radar system U according to the fifth embodiment has a configuration in which: the first transmitting antenna unit 2 includes a first antenna element 2a and a second antenna element 2b arranged in the direction orthogonal to the first direction; and in-phase power is supplied to the first antenna element 2a and the second antenna element 2b.

The first antenna element 2a and the second antenna element 2b in the first transmitting antenna unit 2 are each an antenna element whose directivity direction is the first direction. The first antenna element 2a and the second antenna element 2b are branched from a power feeding point in the signal processing IC 5, and are connected to each other via an impedance transformer 5a.

Fig. 12 is a plan view illustrating a configuration of the impedance transformer 5a according to the fifth embodiment.

In the impedance transformer 5a, for example, a line between the power feeding point and the first antenna element 2a and a line between the power feeding point and the second antenna element 2b are formed such that a difference between the length of the line from the power feeding point to the first antenna element 2a and the length of the line from the power feeding point to the second antenna element 2b is equal to an electrical length of $\lambda e/2 \times 2m$, where m is an arbitrary integer equal to 0 or greater, and $\lambda e$ is an effective wavelength of the first transmission wave Tx1 in the lines. In Fig. 12, the impedance transformer 5a is set such that the length of the line between the power feeding point and the first antenna element 2a and the length of the line between the power feeding point and the second antenna element 2b are equal to each other.

Thereby, when the first transmitting antenna unit 2 transmits the electromagnetic waves, the in-phase power is supplied to the first antenna element 2a and the second antenna element 2b from the power feeding point in the signal processing IC 5. Thus, in the first direction, the electromagnetic waves transmitted by the first and second antenna elements 2a, 2b in the first transmitting antenna unit 2 strengthen each other. This makes it possible to enhance the output gain in the first direction. Fig. 11 comparatively illustrates a directivity pattern 2R formed when the first antenna element 2a and the second antenna element 2b transmit the first transmission wave Tx1, and a directivity pattern 2Ra formed when the first antenna element 2a transmits the first transmission wave Tx1.

As discussed above, in the radar system U according to the fifth embodiment, the first transmitting antenna unit 2 includes the first and second antenna elements 2a, 2b respectively supplied with the in-phase powers. This makes it possible to further enhance the accuracy of detecting an object in the area in the first direction without increasing the number of antenna elements.

(Sixth Embodiment)

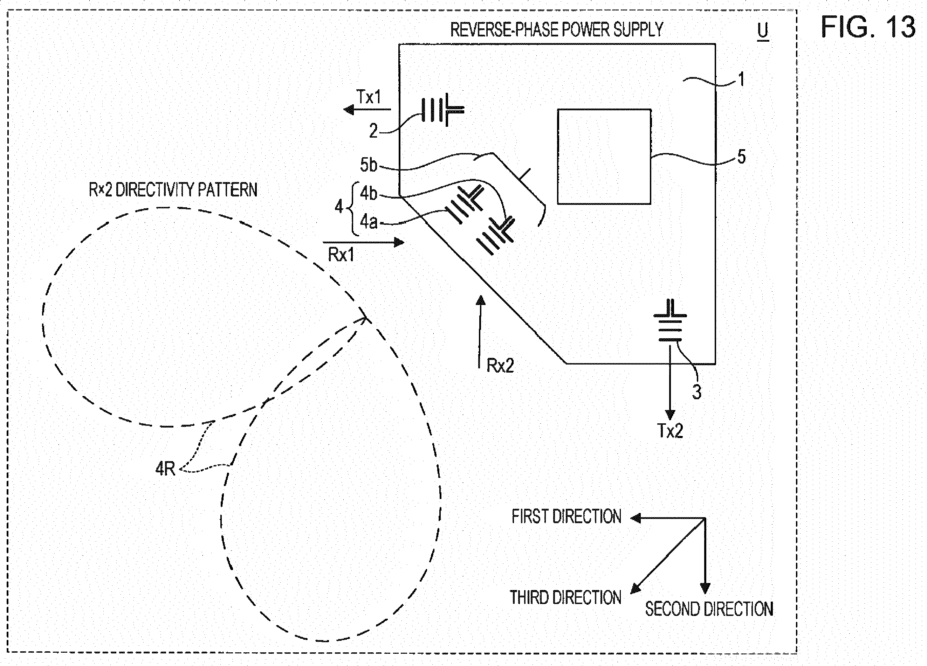

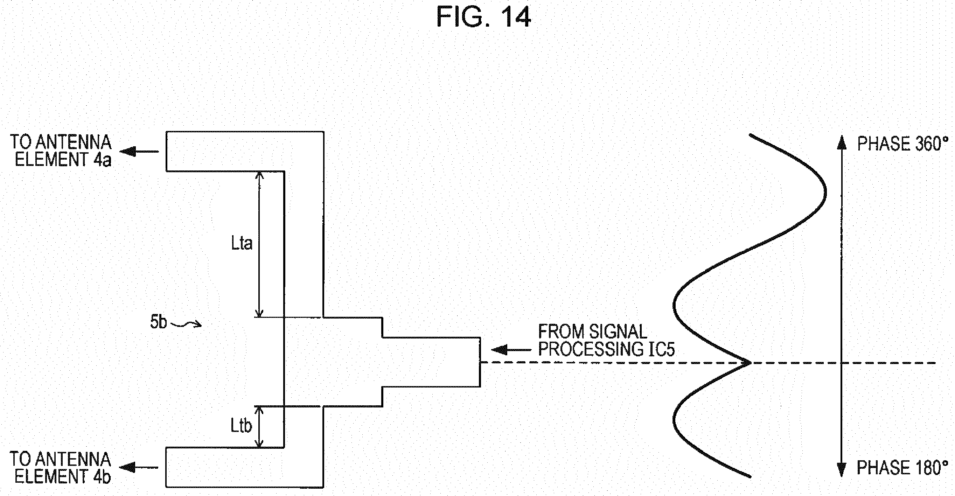

Next, referring to Figs. 13 and 14, descriptions will be provided for a radar system U according to a sixth embodiment.

Fig. 13 is a plan view illustrating a configuration of the radar system U according to the sixth embodiment.

The radar system U according to the sixth embodiment is different from the radar system U according to the first embodiment in that the antenna elements 4a, 4b in the receiving antenna unit 4 are connected to the power feeding point in the signal processing IC 5 such that opposite-phase powers are respectively to the antenna elements 4a, 4b. Incidentally, in the sixth embodiment, the antenna element 4a and the antenna element 4b are referred to as a "third antenna element 4a" and a "fourth antenna element 4b," respectively, for the sake of explanatory convenience.

The third antenna element 4a and the fourth antenna element 4b in the receiving antenna unit 4 are each an antenna element whose directivity direction is the third direction. The third antenna element 4a and the fourth antenna element 4b are branched from the power feeding point in the signal processing IC 5, and are connected to each other via an impedance transformer 5b.

Fig. 14 is a plan view illustrating a configuration of the impedance transformer 5b according to the fifth embodiment.

In the impedance transformer 5b, for example, a line between the power feeding point and the third antenna element 4a and a line between the power feeding point and the fourth antenna element 4b are formed such that a difference between the length of the line from the power feeding point to the third antenna element 4a and the length of the line from the power feeding point to the fourth antenna element 4b is equal to an electrical length of $\lambda e/2 \times (2m-1)$, where m is an arbitrary positive integer, and $\lambda e$ is an effective wavelength of the first transmission wave Tx1 or the second transmission wave Tx2 in the corresponding line. In Fig. 14, the impedance transformer 5b is set such that a length Lta of a part of the line between its branch point from the power feeding point to the third antenna element 4a and a length Ltb of a part of the line between its branch point from the power feeding point to the fourth antenna element 4b are different from each other by an electrical angle of $\pi$.

Because of this configuration, when the receiving antenna unit 4 receives the electromagnetic waves, the third antenna element 4a and the fourth antenna element 4b supply the opposite-phase powers to the power feeding point. Thus, the reception signals from the third direction received respectively by the third and fourth antenna element 4a, 4b weaken each other, while the reception signals from the first and second directions received respectively by the third and fourth antenna elements 4a, 4b strengthen each other.

Specifically, the directivity patterns formed by the third and fourth antenna elements 4a, 4b in the receiving antenna unit 4 are combined together such that the directivity patterns weaken each other in the third direction and are thus separated from each other in the first and second directions. In Fig. 13, areas 4R indicated with dotted lines represent the directivity patterns formed by the third and fourth antenna elements 4a, 4b.

As discussed above, in the radar system U according to the sixth embodiment, the receiving antenna unit 4 includes the third and fourth antenna elements 4a, 4b respectively supplied with the opposite-phase powers. This makes it possible to enhance the antenna gains in the first and second directions, and accordingly to further enhance the accuracy of detecting objects in the areas in the first and second directions.

(Seventh Embodiment)

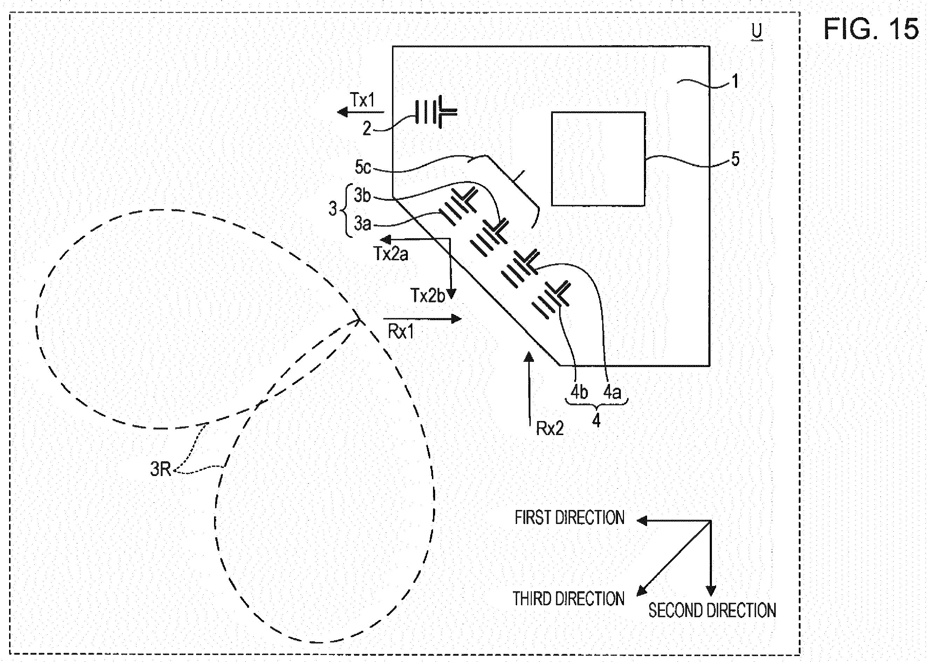

Next, referring to Fig. 15, descriptions will be provided for a radar system U according to the seventh embodiment.

Fig. 15 is a plan view illustrating a configuration of the radar system U according to the seventh embodiment.

The radar system U according to the seventh embodiment is different from the radar system U according to the first embodiment in that: the second transmitting antenna unit 3 includes multiple antenna elements (in this case, referred to as a "fifth antenna element 3a" and a "sixth antenna element 3b") arranged in the direction orthogonal to the third direction; and opposite-phase powers are respectively supplied to the fifth antenna element 3a and the sixth antenna element 3b.

The fifth antenna element 3a and the sixth antenna element 3b in the second transmitting antenna unit 3 are each an antenna element whose directivity direction is the third direction. The fifth antenna element 3a and the sixth antenna element 3b are branched from the power feeding point in the signal processing IC 5, and are connected to each other via an impedance transformer 5c.

In the impedance transformer 5c according to the seventh embodiment, for example, a line between the power feeding point and the fifth antenna element 3a and a line between the power feeding point and the sixth antenna element 3b are formed (although not illustrated) such that a difference between the length of the line from the power feeding point to the fifth antenna element 3a and the length of the line from the power feeding point to the sixth antenna element 3b is equal to an electrical length of $\lambda e/2 \times (2m-1)$, where m is an arbitrary positive integer, and $\lambda e$ is an effective wavelength of the second transmission wave Tx2 in the corresponding line. Because of this configuration, when the second transmitting antenna unit 3 transmits the electromagnetic waves, the opposite-phase powers are respectively supplied to the fifth antenna element 3a and the sixth antenna element 3b from the power feeding point in the signal processing IC 5.

Thereby, the electromagnetic waves Tx2a, Tx2b transmitted by the fifth and sixth antenna elements 3a, 3b in the second transmitting antenna unit 3 weaken each other in the third direction, and strengthen each other in the first and second directions. In Fig. 15, areas 3R indicated with dotted lines represent directivity patterns formed by the fifth and sixth antenna elements 3a, 3b.

As discussed above, in the radar system U according to the seventh embodiment, the second transmitting antenna unit 3 includes the fifth and sixth antenna elements 3a, 3b respectively supplied with the opposite-phase powers. This makes it possible to enhance the output gain in the first direction, and accordingly to further enhance the accuracy of detecting an object in the area in the first direction.

In this case, the MIMO radar can be also formed by setting the space between the antenna element in the first transmitting antenna unit 2 and an antenna element (the fifth antenna element 3a) in the second transmitting antenna unit 3 appropriately (for example, by setting the space four times the pitch L_rx between the antenna elements 4a, 4b in the receiving antenna unit 4 which is viewed from the first direction), as in the case of the fourth embodiment.

It is preferable that the radar system U according to the seventh embodiment have a configuration in which the transmission of electromagnetic waves in the first direction is achieved by transmitting electromagnetic waves respectively from the first and second transmitting antenna units 2, 3 at the same time while making the phases of the electromagnetic waves transmitted from the first and second transmitting antenna units 2, 3 coincide with each other.

(Eighth Embodiment)

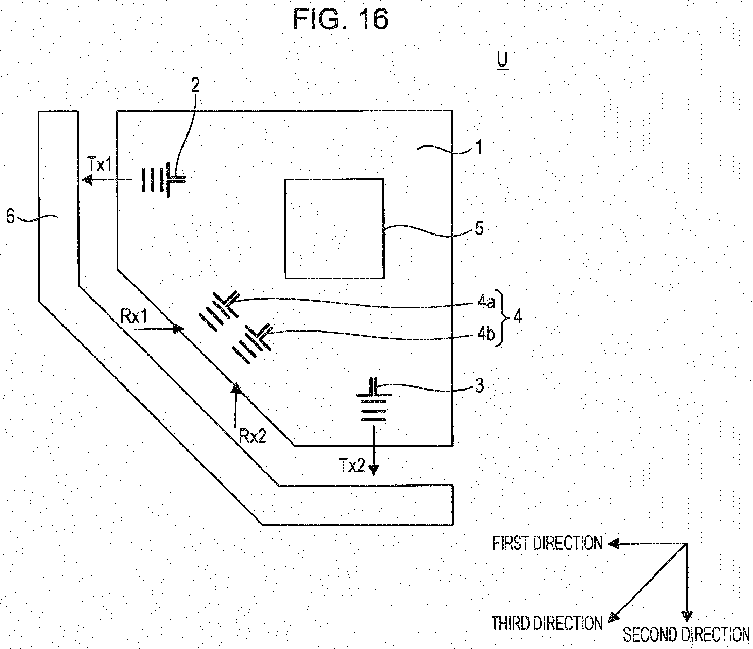

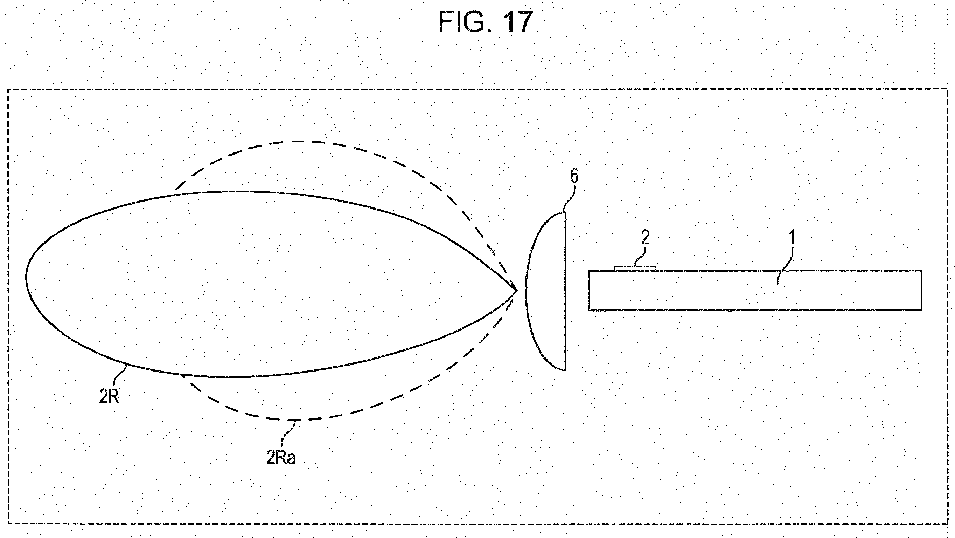

Next, referring to Figs. 16 and 17, descriptions will be provided for a radar system U according to an eighth embodiment.

Fig. 16 is a plan view illustrating a configuration of the radar system U according to the eighth embodiment. Fig. 17 is a side cross-sectional view illustrating the configuration of the radar system U according to the eighth embodiment.

The radar system U according to the eighth embodiment is different from the radar system U according to the first embodiment in that the radar system U according to the eighth embodiment includes a dielectric lens 6.

The dielectric lens 6 is attached to the window section Ub in the housing Ua. For the configurations of the housing Ua and the window section Ub, see Fig. 4. For the convenience sake, Fig. 16 omits the housing Ua in order to visualize the internal structure. Specifically, the dielectric lens 6 is arranged in a way that separates the first transmitting antenna unit 2, the second transmitting antenna unit 3 and the receiving antenna unit 4 from an area outside the system. The dielectric lens 6 narrows a beam of the first transmission wave Tx1 transmitted by the first transmitting antenna unit 2, and sends out the narrowed beam to the outside of the system in the first direction. The dielectric lens 6 also collects the first reflection wave Rx1 coming from the outside of the system, and sends out the collected first reflection wave Rx1 to the receiving antenna unit 4. In addition, the dielectric lens 6 narrows a beam of the second transmission wave Tx2 transmitted by the second transmitting antenna unit 3, and sends out the narrowed beam to the outside of the system in the second direction. The dielectric lens 6 also collects the second reflection wave Rx2 coming from the outside of the system, and sends out the collected second reflection wave Rx2 to the receiving antenna unit 4.

The dielectric lens 6 functions to enhance the antenna gains, respectively, of the first transmitting antenna unit 2, the second transmitting antenna unit 3 and the receiving antenna unit 4. Fig. 17 comparatively illustrates a directivity pattern 2R which is formed by the first transmitting antenna unit 2 in the case where the dielectric lens 6 is provided, and a directivity pattern 2Ra which would be formed by the first transmitting antenna unit 2 if no dielectric lens 6 were provided.

A front-side portion of the dielectric lens 6, through which the electromagnetic waves are transmitted, is formed, for example, in a convex shape. Furthermore, the dielectric lens 6 extends along the places where the first transmitting antenna unit 2, the second transmitting antenna unit 3 and the receiving antenna unit 4 are arranged. At any position of the dielectric lens 6 in the extending direction, the side cross section of the dielectric lens 6 is formed in substantially the same convex shape (that is to say, such a semi-cylindrical shape that a portion of the dielectric lens 6 facing the outside of the system curves out).

Examples of a material used to make the dielectric lens 6 include acrylic resin, ethylene tetrafluoride resin, polystyrene resin, polycarbonate resin, polybutylene terephthalate resin, polyphenylene resin, polypropylene resin, syndiotactic polystyrene resin, and acrylonitrile butadiene styrene (ABS) resin.

As discussed above, the radar system U according to the eighth embodiment includes the dielectric lens 6. This makes it possible to enhance the accuracy of detecting objects.

(Ninth Embodiment)

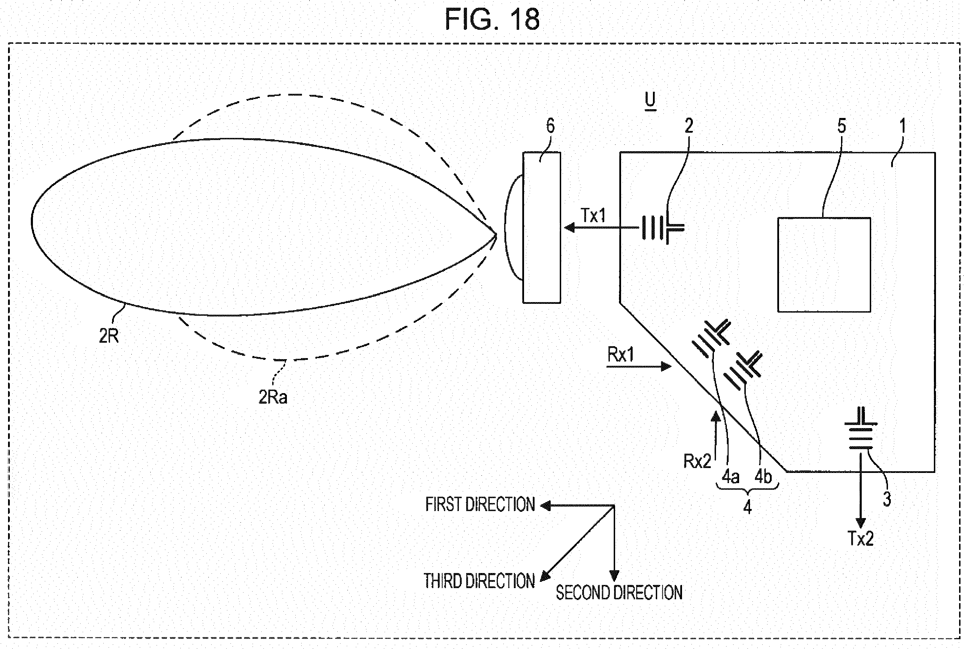

Next, referring to Fig. 18, descriptions will be provided for a radar system U according to a ninth embodiment.

Fig. 18 is a plan view illustrating a configuration of the radar system U according to the ninth embodiment.

The radar system U according to the ninth embodiment is different from the radar system U according to the eighth embodiment in that the dielectric lens 6 is provided to the first transmitting antenna unit 2.

The dielectric lens 6 according to the ninth embodiment is arranged in a position which is away from the first transmitting antenna unit 2 in the first direction. The dielectric lens 6 narrows a beam of the first transmission wave Tx1 transmitted by the first transmitting antenna unit 2, and sends out the narrowed beam to the outside of the system.

Unlike the dielectric lens 6 according to the eighth embodiment, the dielectric lens 6 according to the ninth embodiment is formed in such a dome shape that the front surface of the dielectric lens 6 in the first direction curves out. If the dielectric lens 6 is expected to narrow the beam of the first transmission wave Tx1 in the first direction, the dielectric lens 6 may be formed in a semi-cylindrical shape curving out in the first direction in its plan view, instead of a dome shape mentioned above.

This makes it possible to obtain a higher output gain in the first direction. Fig. 18 comparatively illustrates a directivity pattern 2R which is formed by the first transmitting antenna unit 2 in the case where the dielectric lens 6 is provided, and a directivity pattern 2Ra which would be formed by the first transmitting antenna unit 2 if no dielectric lens 6 were provided.

In the ninth embodiment, the dielectric lens 6 according to the eighth embodiment may be also arranged in areas in front of the second transmitting antenna unit 3 and the receiving antenna unit 4 in a way that separates the second transmitting antenna unit 3 and the receiving antenna unit 4 from the area outside of the system.

As discussed above, the dielectric lens 6 may be arranged for the first transmitting antenna unit 2 which is required to obtain a higher output gain. This configuration also makes it possible to enhance the accuracy of detecting an object in the area in the first direction.

(Tenth Embodiment)

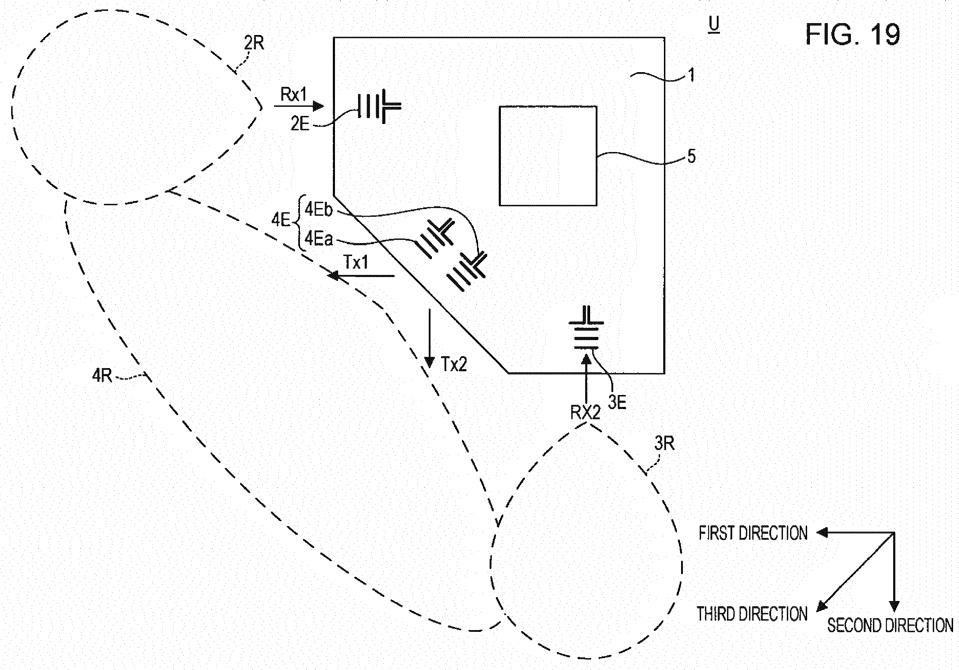

Next, referring to Fig. 19, descriptions will be provided for a radar system U according to a tenth embodiment.

Fig. 19 is a plan view illustrating a configuration of the radar system U according to the tenth embodiment.

The radar system U according to the tenth embodiment is different from the radar system U according to the first embodiment in that its transmitting and receiving antenna units are set in a way that is the opposite of the way in which the transmitting and receiving antenna units of the radar system U according to the first embodiment are set.

The radar system U according to the tenth embodiment uses the receiving antenna unit 4 as a transmitting antenna unit 4E; the first transmitting antenna unit 2 as a first receiving antenna unit 2E; and the second transmitting antenna unit 3 as a second receiving antenna unit 3E. The directivity characteristics of the transmitting antenna unit 4E, the first receiving antenna unit 2E and the second receiving antenna unit 3E are the same as those of the receiving antenna unit 4, the first transmitting antenna unit 2 and the second transmitting antenna unit 3 according to the first embodiment. In other words, the control to be performed by the signal processing IC 5 make the radar system U according to the tenth embodiment different from the radar system U according to the first embodiment.

In the radar system U according to the tenth embodiment, the transmitting antenna unit 4E is formed as a phased array radar. The transmission of electromagnetic waves in the first and second directions is achieved by transmitting the electromagnetic waves respectively from antenna elements 4Ea, 4Eb included in the transmitting antenna unit 4E at the same time while controlling the phase difference between the phases of the electromagnetic waves transmitted from the antenna elements 4Ea, 4Eb.

To transmit an electromagnetic wave from the transmitting antenna unit 4E in the first direction, the signal processing IC 5 according to the tenth embodiment changes the angle of transmission of the electromagnetic wave stepwise from the first direction to the two beamwidth directions. Then, the signal processing IC 5 performs the bearing estimation on the position of the target based on the intensity of the reflection wave from each bearing which is received by the first receiving antenna unit 2E.

Similarly, to transmit an electromagnetic wave from the transmitting antenna unit 4E in the second direction, the signal processing IC 5 according to the tenth embodiment changes the angle of transmission of the electromagnetic wave stepwise from the second direction to the two beamwidth directions. Then, the signal processing IC 5 performs the bearing estimation on the position of the target based on the intensity of the reflection wave from each bearing which is received by the second receiving antenna unit 3E.

Thus, the radar system U according to the tenth embodiment is capable of achieving a highly accurate target bearing estimation in both the first and second directions which are away from each other, without increasing the number of antenna elements.

(Other Embodiments)

The present disclosure is not limited to the above embodiments, and various modified modes are conceivable.

For example, the above embodiments have discussed various examples of the configuration of the radar system U. However, it is a matter of course that the modes discussed in the embodiments may be combined variously.

The above embodiments have discussed the mode in which the first transmitting antenna unit 2, the second transmitting antenna unit 3 and the receiving antenna unit 4 are each made of the end-fire array antenna. The first transmitting antenna unit 2, the second transmitting antenna unit 3 and the receiving antenna unit 4 serve the purpose as long as they are each made of a conductor pattern formed in the circuit board 1. The first transmitting antenna unit 2, the second transmitting antenna unit 3 and the receiving antenna unit 4 may be made of a Yagi array antenna, a Fermi antenna, a post-wall waveguide antenna, a post-wall horn antenna, or the like, instead of the end-fire array antenna. Furthermore, the first transmitting antenna unit 2, the second transmitting antenna unit 3 and the receiving antenna unit 4 may be made of different types of antennae, respectively.

The above embodiments have discussed the mode of detecting objects in the mutually-separated areas in the two directions, as an example of the configuration of the radar system U. The radar system U according to the present disclosure, however, may have a configuration for detecting objects respectively in areas in three or more directions.

Although the foregoing detailed descriptions have been provided for the specific examples of the present disclosure, they are merely cited as examples, and does not limit claims. The technologies described in the claims include various modifications and changes to the specific examples cited above.

The present disclosure can be realized by software, hardware, or software in cooperation with hardware.

Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration.

However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing.

If future integrated circuit technology replaces LSIs as a result of the advancement of semiconductor technology or other derivative technology, the functional blocks could be integrated using the future integrated circuit technology. Biotechnology can also be applied.

The radar system according to the present disclosure is capable of highly accurately estimating the bearings of the existence of targets respectively in the mutually-separated areas in the multiple directions.

Claims

1. A radar system which detects positions of targets existing in mutually-separated areas in first and second directions outside the radar system,
the radar system comprising:

a circuit board whose board surface is arranged parallel with the first and the second directions;
a first transmitting antenna unit arranged in an end portion area of the circuit board facing in the first direction, which transmits a first transmission wave in the first direction;
a second transmitting antenna unit arranged in an end portion area of the circuit board facing in the second direction, which transmits a second transmission wave in the second direction; and

a receiving antenna unit arranged in an end portion area of the circuit board facing in a third direction between the first direction and the second direction, and including a plurality of antenna elements arranged in a line in a direction orthogonal to the third direction, which receives reflection waves corresponding to the first and second transmission waves.

2. The radar system according to Claim 1, wherein an angle between the first direction and the second direction is 60° or more but 120° or less.

3. The radar system according to Claim 1, wherein the first transmitting antenna unit includes an antenna element whose directivity direction is the first direction.

4. The radar system according to Claim 1, wherein the second transmitting antenna unit includes an antenna element whose directivity direction is the second direction.

5. The radar system according to Claim 1, wherein the first transmitting antenna unit, the second transmitting antenna unit and the receiving antenna unit are each formed of an end-fire array antenna.

6. The radar system according to Claim 1, wherein the third direction is a direction substantially intermediate between the first direction and the second direction.

7. The radar system according to Claim 1, wherein the third direction tilts to the first direction and farther from the second direction.

8. The radar system according to Claim 1, wherein the first transmitting antenna unit includes a plurality of antenna elements arranged in a line in a direction orthogonal to the first direction.

9. The radar system according to Claim 8, wherein a pitch of the plurality of antenna elements in the first transmitting antenna unit is set different from a pitch of the plurality of antenna elements in the receiving antenna unit which is viewed from the first direction.

10. The radar system according to Claim 8, wherein the plurality of antenna elements in the first transmitting antenna unit include first and second antenna elements branched from a power feeding point and connected to each other, a length of a line from the power feeding point to a position where the line is connected to the first antenna element and a length of a line from the power feeding point to a position where the line is connected to the second antenna element being adjusted such that phases respectively depending on the lines connected to the first and second antenna elements are the same as each other.

11. The radar system according to Claim 1, wherein the second transmitting antenna unit includes a plurality of antenna elements arranged in a line in a direction orthogonal to a fifth direction between the first direction and the second direction.

12. The radar system according to Claim 1, further comprising a dielectric lens arranged in a way that separates the first transmitting antenna unit, the second transmitting antenna unit and the receiving antenna unit from an area outside the radar system, which narrows beams of the first and second transmission waves and sends out the narrowed beams to the outside of the radar system.

13. The radar system according to Claim 12, wherein at any position of the dielectric lens in a direction of extension of the dielectric lens, a side cross section of the dielectric lens is formed in substantially the same convex shape.

14. The radar system according to Claim 1, further comprising a dielectric lens arranged in a position away from the first transmitting antenna unit in the first direction, which narrows a beam of the first transmission wave and sends out the narrowed beam to an outside of the radar system, wherein the dielectric lens is formed in such a dome shape that a front surface of the dielectric lens in the first direction curves out.

15. The radar system according to Claim 14, further comprising a second dielectric lens arranged in a way that separates the second transmitting antenna unit and the receiving antenna unit from an area outside the radar system, which narrows a beam of the second transmission wave and sends out the narrowed beam to the outside of the radar system.

# FIG. 1

FIG. 2

FIG. 3

# FIG. 4

EP 3 547 452 A1

FIG. 5

EP 3 547 452 A1

EP 3 547 452 A1

# FIG. 6

22

# FIG. 7

EP 3 547 452 A1

FIG. 8

EP 3 547 452 A1

# FIG. 9

EP 3 547 452 A1

## FIG. 10A

4d 4c 4b 4a 2c

2b

2a

4

2

## FIG. 10B

L_rx L_rx L_rx L_rx L_tx L_tx

θ

θ

4d 4c 4b 4a 2c

2b

2a

4

2

FIG. 11

FIRST DIRECTION

THIRD DIRECTION    SECOND DIRECTION

EP 3 547 452 A1

FIG. 12

TO ANTENNA ELEMENT 2b ◄─────

5a ↝

◄───── FROM SIGNAL PROCESSING IC5

TO ANTENNA ELEMENT 2a ◄─────

FIG. 13

REVERSE-PHASE POWER SUPPLY

Rx2 DIRECTIVITY PATTERN

FIRST DIRECTION

THIRD DIRECTION    SECOND DIRECTION

EP 3 547 452 A1

# FIG. 14

TO ANTENNA
ELEMENT 4a

Lta

5b

Ltb

TO ANTENNA
ELEMENT 4b

FROM SIGNAL
PROCESSING IC5

PHASE 360°

PHASE 180°

EP 3 547 452 A1

FIG. 15

EP 3 547 452 A1

## FIG. 16

EP 3 547 452 A1

FIG. 17

EP 3 547 452 A1

# FIG. 18

EP 3 547 452 A1

FIG. 19

EP 3 547 452 A1

Europäisches
Patentamt

European
Patent Office

Office européen
des brevets

# EUROPEAN SEARCH REPORT

Application Number

EP 19 16 1836

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 9 917 355 B1 (LEE JAE SEUNG [US] ET AL) 13 March 2018 (2018-03-13) | 1-11 | INV. H01Q21/28 |
| Y | * column 9, line 62 - column 10, line 34; figure 5 * <br> * column 8, line 13 - line 18; claim 8 * | 12-15 | H01Q25/00 H01Q1/32 H01Q21/00 H01Q21/08 |
| Y | DE 10 2007 036262 A1 (BOSCH GMBH ROBERT [DE]) 5 February 2009 (2009-02-05) * paragraph [0031] - paragraph [0037]; figures 6-8 * | 12,13 | H01Q1/42 H01Q19/06 G01S13/93 H01Q23/00 |
| Y | EP 1 195 849 A2 (MURATA MANUFACTURING CO [JP]) 10 April 2002 (2002-04-10) * abstract * | 14,15 | G01S13/87 G01S7/03 |
| A | DE 10 2014 014860 B3 (AUDI AG [DE]) 17 September 2015 (2015-09-17) * paragraph [0039]; figure 5 * | 1-15 | |
| A | DE 10 2014 208389 A1 (BOSCH GMBH ROBERT [DE]) 12 November 2015 (2015-11-12) * abstract * | 1-15 | TECHNICAL FIELDS SEARCHED (IPC) |
| A | DE 10 2015 207186 A1 (BOSCH GMBH ROBERT [DE]) 27 October 2016 (2016-10-27) * abstract * | 1-15 | H01Q G01S |
| A | DE 10 2015 122708 A1 (INFINEON TECHNOLOGIES AG [DE]) 23 June 2016 (2016-06-23) * paragraph [0036]; figure 2c * | 1-15 | |
| A | DE 10 2013 100554 A1 (HELLA KGAA HUECK & CO [DE]) 24 July 2014 (2014-07-24) * abstract * | 1-15 | |

The present search report has been drawn up for all claims

| Place of search | Date of completion of the search | Examiner |
|---|---|---|
| Munich | 14 August 2019 | Kaleve, Abraham |

EPO FORM 1503 03.82 (P04C01)

## ANNEX TO THE EUROPEAN SEARCH REPORT
## ON EUROPEAN PATENT APPLICATION NO.

EP 19 16 1836

This annex lists the patent family members relating to the patent documents cited in the above-mentioned European search report.
The members are as contained in the European Patent Office EDP file on
The European Patent Office is in no way liable for these particulars which are merely given for the purpose of information.

14-08-2019

| Patent document cited in search report | Publication date | Patent family member(s) | | Publication date |
|---|---|---|---|---|
| US 9917355 B1 | 13-03-2018 | NONE | | |
| DE 102007036262 A1 | 05-02-2009 | DE 102007036262 A1 | | 05-02-2009 |
| | | EP 2176681 A1 | | 21-04-2010 |
| | | US 2010231436 A1 | | 16-09-2010 |
| | | WO 2009015945 A1 | | 05-02-2009 |
| EP 1195849 A2 | 10-04-2002 | DE 60123905 T2 | | 12-04-2007 |
| | | EP 1195849 A2 | | 10-04-2002 |
| | | JP 2002111359 A | | 12-04-2002 |
| | | KR 20020025049 A | | 03-04-2002 |
| | | US 2002067314 A1 | | 06-06-2002 |
| DE 102014014860 B3 | 17-09-2015 | DE 102014014860 B3 | | 17-09-2015 |
| | | EP 3204790 A1 | | 16-08-2017 |
| | | WO 2016055130 A1 | | 14-04-2016 |
| DE 102014208389 A1 | 12-11-2015 | CN 106256043 A | | 21-12-2016 |
| | | DE 102014208389 A1 | | 12-11-2015 |
| | | EP 3140882 A1 | | 15-03-2017 |
| | | JP 6364119 B2 | | 25-07-2018 |
| | | JP 2017517993 A | | 29-06-2017 |
| | | US 2017047649 A1 | | 16-02-2017 |
| | | WO 2015169469 A1 | | 12-11-2015 |
| DE 102015207186 A1 | 27-10-2016 | NONE | | |
| DE 102015122708 A1 | 23-06-2016 | CN 105720352 A | | 29-06-2016 |
| | | DE 102015122708 A1 | | 23-06-2016 |
| | | KR 20160077002 A | | 01-07-2016 |
| | | US 2016178730 A1 | | 23-06-2016 |
| | | US 2019113601 A1 | | 18-04-2019 |
| DE 102013100554 A1 | 24-07-2014 | NONE | | |

EPO FORM P0459

For more details about this annex : see Official Journal of the European Patent Office, No. 12/82

**EP 3 547 452 A1**

REFERENCES CITED IN THE DESCRIPTION

**Patent documents cited in the description**

- JP 2008503904 W

- JP 2012159348 A